# EUROPÄISCHE PATENTSCHRIFT

(11) **EP 0 880 816 B1**
(45) Veröffentlichungstag und Bekanntmachung des Hinweises auf die Patenterteilung: **25.10.2000**
(21) Anmeldenummer: 97915293.1
(22) Anmeldetag: 08.02.1997
(51) Int. Cl.: H02K 1/04, H01F 27/245, H01F 41/02, H02K 15/02

(54) **VERFAHREN ZUR HERSTELLUNG EINER ELEKTROMAGNETISCHEN BAUGRUPPE FÜR EINE MAGNETSCHWEBEBAHN**
PROCESS FOR PRODUCING AN ELECTROMAGNETIC SUBASSEMBLY FOR A MAGNETIC LEVITATION RAILWAY
PROCEDE DE FABRICATION D'UN MODULE ELECTROMAGNETIQUE POUR UN TRAIN A SUSTENTATION MAGNETIQUE

(30) Priorität: 12.02.1996 CH 35996; 31.01.1997 DE 19703497
(43) Veröffentlichungstag der Anmeldung: 02.12.1998
(73) Patentinhaber: Thyssen Transrapid System GmbH, 34127 Kassel (DE)
(72) Erfinder: MILLER, Luitpold, D-85521 Ottobrunn (DE); HAHN, Wolfgang, D-34125 Kassel (DE)
(74) Vertreter: Freiherr von Schorlemer, Reinfried, Dipl.-Phys.
(86) Internationale Anmeldenummer: DE9700294
(87) Internationale Veröffentlichungsnummer: WO9730505

(56) Entgegenhaltungen:
- EP-A- 0 410 153
- DE-A- 1 538 991
- DE-A- 2 009 631
- DE-A- 2 360 820
- DE-A- 3 012 320
- DE-A- 3 110 339
- DE-A- 4 338 913
- DE-C- 163 082
- FR-A- 2 687 862
- BULLETIN DER SCHWEIZISCHEN ELEKTROT. VEREINS, Bd. 63, Nr. 22, 28.Oktober 1972, XP002032838 W DIETERLE UND J SCHIRR: "ELEKTRISCHE UND MECHANISCHE EIGENSCHAFTEN VON IM DRUCKGELIERVERFAHREN HERGESTELLTEN EPOXIDHARZFORMSTOFFEN"

## Beschreibung

Die Erfindung betrifft ein Verfahren nach dem Oberbegriff des Anspruchs 1.

Bei einem bekannten Verfahren dieser Art (DE 31 10 339 C2) zur Herstellung von Statorpaketen werden zunächst aus siliziertem Elektroblech hergestellte Streifen vorzugsweise beidseitig mit zusätzlichen Kleberschichten versehen, die z.B. aus einem vorgehärteten duroplastischen Kleber bestehen und ggf. bereits im Walzwerk in einem aufwendigen, kostspieligen Arbeitsschritt aufgebracht werden. Die Herstellung von Blechpaketen erfolgt dann dadurch, daß aus derartigen, von Coils (Trommeln) abgezogenen Blechstreifen Blechzuschnitte bzw. Lamellen ausgestanzt und diese dann zu Stapeln zusammengesetzt und danach durch Erwärmung unter gleichzeitiger Pressung mechanisch fest zu einem Blechpaket miteinander verbunden werden. Anschließend werden die fertigen Blechpakete zusätzlich mit einem Überzug aus einem Epoxidharz od. dgl. versehen, um die beim Stanzen freigelegten Schnittkanten der Bleche nachträglich mit einem Korrosionsschutz zu versehen. Schließlich werden die einzelnen Blechpakete durch Kleben, Schrauben, Klemmen od. dgl. mit weiteren Bauelementen, insbesondere mit zu ihrer Befestigung an einem Fahrweg bestimmten Traversen zum fertigen Statorpaket verbunden, wobei zur Erzielung einer ausreichenden mechanischen Stabilität in der Regel Nachteile in elektromagnetischer Hinsicht in Kauf genommen werden müssen, z.B. im Hinblick auf die elektromagnetisch ungünstigen, zur Anbringung der elektrischen Leitungen jedoch gewünschten Querschnittsformen der Nuten.

In ähnlicher Weise werden Magnetpole für Langstator-Linearmotoren hergestellt, wobei fertige Blechpakete anschließend mit Wicklungen und Polwangen od. dgl. versehen und verbunden werden. Auch hierbei müssen Kompromisse zwischen mechanischer Stabilität und elektromagnetischen Eigenschaften in Kauf genommen werden, z.B. im Hinblick auf die zur sicheren Montage der Wicklungen erforderliche, jedoch mit unerwünschten magnetischen Streueffekten verbundene Geometrie des aus dem Blechpaket hergestellten Eisenkerns.

Verfahren dieser Art sind wegen der zur Beschichtung der Elektroblechstreifen benötigten Anlagen mit hohen Investitionskosten verbunden. Nachteilig ist ferner, daß der beim Stanzen anfallende Verschnitt mit einer Kleberschicht versehen ist, was aus Umweltschutzgründen vermieden werden sollte und ein sortenreines Recycling des Blechverschnitts verhindert. Schließlich erfordert das bekannte Verfahren zahlreiche, hintereinander geschaltete Teilschritte, die jeweils einem vorgewählten Teilzweck dienen.

Daneben ist es in der Elektrotechnik allgemein bekannt, Blechpakete der beschriebenen Art zusammen mit anderen Bauelementen zu fertigen Baugruppen zu verbinden, indem sie in ein Gießharz od. dgl. eingebettet werden. Anker für Elektromotoren werden beispielsweise dadurch hergestellt, daß die zugehörigen Wellen, Blechpakete, Wicklungen und Kommutatoren zunächst lose zusammengesteckt und dann in einem formgebenden Werkzeug durch Spritzgießen, Spritzpressen od. dgl. mit einer Kunststoffumhüllung versehen werden (DE-A-43 38 913). Dabei werden jedoch einerseits fertige, auf die oben beschriebene Weise hergestellte Blechpakete vorausgesetzt, während andererseits die Frage des Korrosionsschutzes od. dgl. keine Bedeutung hat.

Schließlich ist es bekannt (DE-A-30 12 320), auf Abstand gehaltene Elektrobleche, die keine Kleberschichten aufweisen, dadurch miteinander zu verbinden, daß sie im gestapelten Zustand in ein Werkzeug gegeben und die Zwischenräume zwischen ihnen mit einem aushärtbaren Klebstoff ausgefüllt werden. Die Abstände zwischen den Elektroblechen werden dabei mittels Abstandhaltern erhalten, die z.B. aus den Körnern eines durch Sintern aufgebrachten Metalloxidpulvers bestehen, und sind gleich oder kleiner als 2 µm. Dadurch, daß die Elektrobleche mit einer zusätzlichen Metalloxidschicht versehen werden müssen, ist der Arbeits- und Kostenaufwand gegenüber der Anbringung der üblichen Kleberschichten nicht geringer. Außerdem müssen die fertigen Blechpakete zusätzlich mit einer äußeren Korrosionsschutzschicht versehen werden, falls ein Schutz gegen Korrosion erwünscht oder erforderlich ist. Schließlich ist es bei Anwendung dieses bekannten Verfahrens erforderlich, im Werkzeug ein Fein- bzw. Hochvakuum von ca. 1,3 · 10 ⁻³ mbar und weniger aufrechtzuerhalten, was aus verfahrenstechnischen Gründen unerwünscht ist und den insgesamt erforderlichen Arbeits- und Kostenaufwand vergrößert. Verfahren dieser Art werden daher auf die Herstellung von kompletten Magnetpolen oder Statorpaketen für Langstator-Linearmotoren von Magnetschwebebahnen nicht angewendet.

Der Erfindung liegt daher die Aufgabe zugrunde, das oben erläuterte Verfahren zur Herstellung von Magnetpolen und Statorpaketen so abzuwandeln, daß geringere Investitionskosten und weniger Einzelschritte erforderlich sind und eine bessere Anpassung an die Funktionen der unterschiedlichen beteiligten Bauelemente möglich ist. Außerdem sollen eine hohe mechanische Festigkeit und eine hohe Beständigkeit gegen äußere Witterungseinflüsse erzielt werden.

Zur Lösung dieser Aufgabe dienen die kennzeichnenden Merkmale des Anspruchs 1.

Weitere vorteilhafte Merkmale der Erfindung ergeben sich aus den Unteransprüchen.

Die Erfindung wird nachfolgend anhand von zwei Ausführungsbeispielen näher erläutert, die in der beiliegenden Zeichnung mit geringfügig variierenden Maßstäben dargestellt sind. Es zeigen:
Fig. 1 einige Bleche eines Blechpakets für einen erfindungsgemäßen Magnetkern in einer perspektivischen, auseinandergezogenen Darstellung;
Fig. 2 eine perspektivische Darstellung der zur Herstellung eines kompletten Magnetkerns verwendeten Bauelemente bei in gestapeltem Zustand befindlichem Blechpaket;
Fig. 3 eine perspektivische Darstellung des Magnetkerns nach Fig. 2 im zusammengesetzten Zustand aller Bauelemente;
Fig. 4 in einer perspektivischen Darstellung die Bewicklung eines Wickelkörpers des Magnetkerns nach Fig. 3;
Fig. 5 in einer perspektivischen Darstellung einen mit dem Magnetkern nach Fig. 1 bis 4 hergestellten, eine Wicklung für einen Lineargenerator aufweisenden Magnetpol nach dem Anordnen in einer Hälfte eines Werkzeugs, das zur Imprägnierung des Blechpakets, zur Durchtränkung des Blechpakets und der Wicklung, zur Verbindung des Blechpakets mit den übrigen Bauteilen und zur Umhüllung des gesamten Magnetpols mit einem härtbaren Gemisch dient;
Fig. 6 einen Querschnitt durch das Werkzeug längs der Linie VI-VI der Fig. 5 mit eingelegtem Magnetpol;
Fig. 7 schematisch das Einbringen eines härtbaren Gemischs in das Werkzeug nach Fig. 5 und 6;
Fig. 8 eine perspektivische Darstellung des fertigen Magnetpols;
Fig. 9 eine der Fig. 1 entsprechende Darstellung von einigen Blechen eines erfindungsgemäßen Statorblechpakets;
Fig. 10 und 11 das Statorblechpaket nach Fig. 9 im gestapelten Zustand vor bzw. nach dem Einbringen einer Anzahl von Traversen;
Fig. 12 in einer perspektivischen Ansicht ein aus dem Statorblechpaket und den Traversen nach Fig. 10 und 11 gebildetes Statorpaket nach dem Anordnen in einer Hälfte eines Werkzeugs, das zur Imprägnierung des Blechpakets, zur Durchtränkung des Blechpakets und der Traversen, zur Verbindung des Blechpakets mit den Traversen und zur Umhüllung des gesamten Statorpakets mit einem härtbaren Gemisch dient;
Fig. 13 einen Querschnitt durch die Form längs der Linie XIII-XIII der Fig. 12;
Fig. 14 in einer der Fig. 7 entsprechenden schematischen Darstellung das Einbringen des härtbaren Gemischs in das Werkzeug nach Fig. 12 und 13;
Fig. 15 das fertige Statorpaket und
Fig. 16 in einem stark vergrößerten Maßstab einen Querschnitt durch eine einzelne Nut des Statorpakets nach Fig. 15.

Die Erfindung wird nachfolgend an den Beispielen eines Magnetpols und eines Statorpakets für eine Magnetschwebebahn mit einem Langstator-Linearmotor näher erläutert, deren Aufbau, Funktion und Geometrie dem Fachmann allgemein bekannt sind. Der Einfachheit halber wird in diesem Zusammenhang z.B. auf DE 31 10 339 C2, DE 33 03 961 C2, DE 34 10 119 A1 und DE 39 28 277 C1 verwiesen.

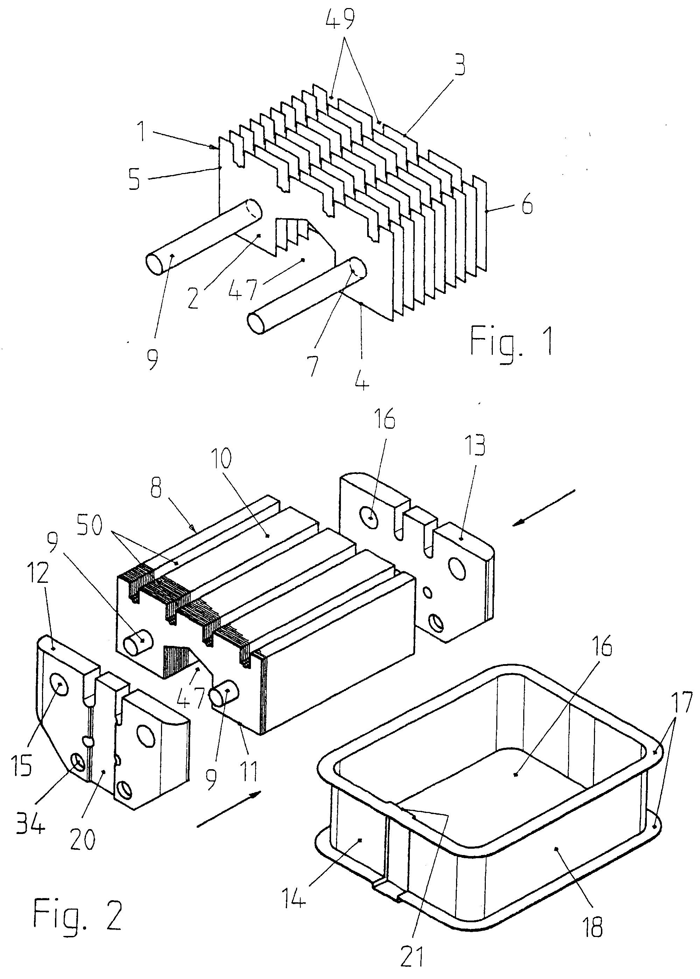

Ein Magnetpol enthält in an sich bekannter Weise einen aus einem Blechpaket bestehenden Eisenkern und eine auf diesen aufgebrachte Wicklung. Nach Fig. 1 bis 8 besteht der Eisenkern aus einer Vielzahl von einzelnen, parallel angeordneten und bündig aufeinander ausgerichteten Blechen oder Lamellen 1, die z.B. durch Ausstanzen aus einem ferromagnetischen Elektroblechstreifen erhalten werden, der von einer Trommel (Coil) abgewikkelt und einem Stanzwerkzeug zugeführt wird. Erfindungsgemäß handelt es sich um einen rohen Elektroblechstreifen. Dabei wird unter der Bezeichnung "roh" verstanden, daß die Elektroblechstreifen im Gegensatz z.B. zu DE 31 10 339 C2 keine in einem besonderen Arbeitsgang aufgebrachte Kleberschicht aufweist. Dagegen kann der Blechstreifen, wie es bei Elektroblechen üblich ist, durch einen Lacküberzug, eine Oxidschicht oder andere preisgünstig aufbringbare Mittel beidseitig mit einer elektrisch isolierenden Schicht versehen sein. Diese Schicht kann bereits im Walzwerk am Blechstreifen angebracht werden und besteht bei heute üblichen Elektroblechen meistens aus einer sehr dünnen Silikat-Phosphat-Schicht, die während des Auswalzens der Elektrobleche hergstellt wird. Für die Zwecke der Erfindung ist diese Schicht vergleichsweise unbedeutend, da sie u.U. auch völlig fehlen kann.

Die einzelnen Bleche 1, von denen in Fig. 1 nur einige dargestellt sind, haben im Ausführungsbeispiel bei einer Dicke von z.B. 0,35 bis 1,00 mm identische Abmessungen und weisen je eine vordere bzw. hintere Breitseite 2 und in Umfangsrichtung je eine schmale Oberseite 3, eine Unterseite 4 und zwei Seitenkanten 5 und 6 auf. Sie werden außerdem beim Stanzvorgang an identischen Stellen mit wenigstens je einem Loch 7 versehen und zur Bildung des Eisenkerns nach dem Stanzvorgang zu Paketen 8 (Fig. 2) gestapelt, indem sie mit ihren vorderen bzw. hinteren Breitseiten 2 bündig und parallel aneinander gelegt werden. Die Zahl der Bleche 1 pro Paket 8 hängt dabei von der Größe und Stärke des herzustellenden Magnetpols ab. Die gegenseitige Ausrichtung der Bleche 1 erfolgt zweckmäßig mit Hilfe von Nutensteinen oder Stäben 9, auf welche die Bleche 1 mit ihren Löchern 7 aufgefädelt werden. Im gestapelten Blechpaket 8 bilden die Oberseiten 3 der einzelnen Bleche 1 eine Magnetpolfläche 10, die Unterseiten 4 dagegen eine Montagefläche 11.

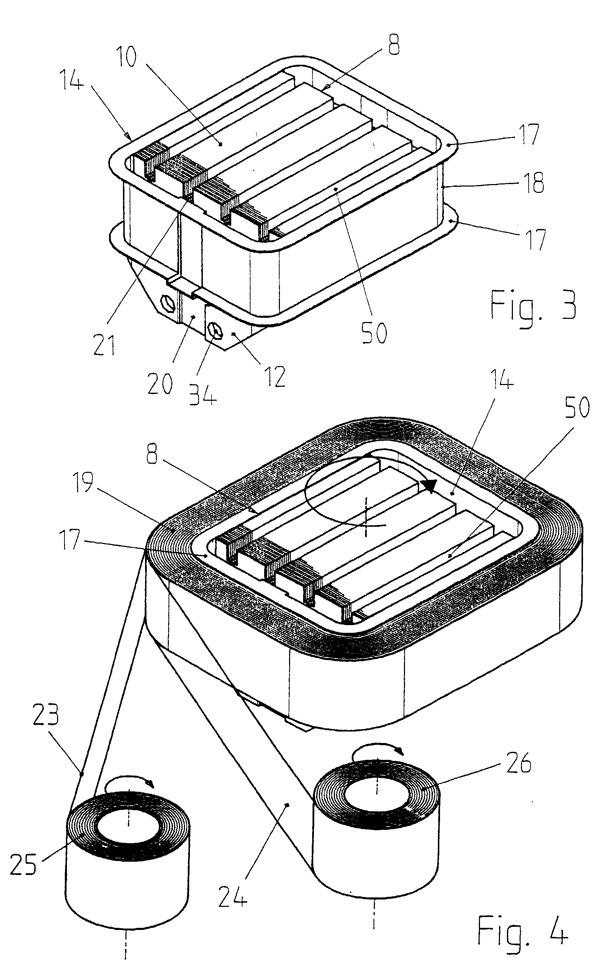

Nach der Stapelbildung werden die beiden Stirnseiten des Blechpakets 8 mit je einer Polwange 12,13 verbunden, die für die erforderliche Stabilität des Magnetkern sorgen und als Träger eines Wickelkörpers 14 (Fig. 2 und 3) dienen. Die relative Ausrichtung der Polwangen 12,13 zum Blechpaket 8 erfolgt zweckmäßig dadurch, daß die Polwangen 12,13 mit Löchern 15 versehen und mit diesen auf die aus dem Blechpaket 8 ragenden Enden der Stäbe 9 aufgesteckt werden und diese Enden dann in sich aufnehmen. Obwohl die Polwangen auch aus Eisen bestehen könnten, werden sie zur Gewichtsreduzierung vorzugsweise aus Aluminium hergestellt.

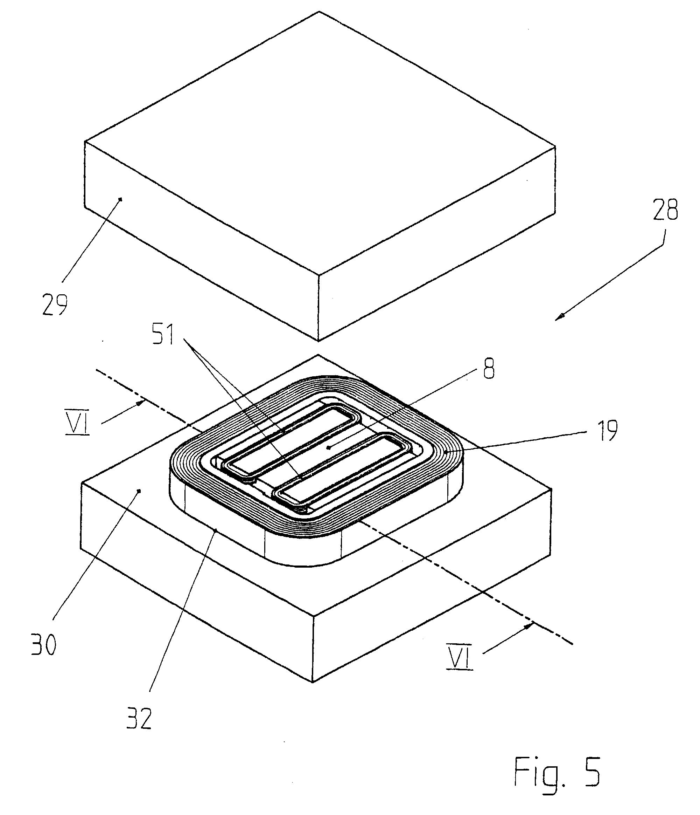

Der Wickelkörper 14 besteht im wesentlichen aus einem aus Isoliermaterial, z.B. Kunststoff hergestellten Rahmen, der einen im Ausführungsbeispiel im wesentlichen quaderförmigen Hohlraum 16 umgibt, dessen Abmessungen in Höhe, Länge und Breite im wesentlichen den Außenabmessungen des Blechpakets 8 einschließlich der Polwangen 12 und 13 entsprechen. Außerdem ist der Wickelkörper 14 an seinem oberen und unteren Ende mit je einem nach außen ragenden, umlaufenden Montageflansch 17 versehen, so daß zwischen den beiden Montageflanschen 17 ein umlaufender Aufnahmeraum 18 für eine Wicklung 19 (Fig. 4) entsteht.

Zur richtigen Positionierung des Wickelkörpers 14 relativ zum Blechpaket 8 sind die Polwangen 12,13 an ihren äußeren Stirnseiten mit Führungsnuten 20 versehen, die senkrecht zu den Stäben 9 und zur Magnetpolfläche 10 angeordnet sind. Entsprechend weist der Wickelkörper 14 an zwei gegenüberliegenden Seiten nach innen ragende Führungsrippen 21 auf, die beim von oben oder unten her erfolgenden Aufsetzen des Wickelkörpers 14 auf das Blechpaket 8 in die Führungsnuten 20 eintreten und dann eine relative Verschiebung des Wickelkörpers 14 zur Magnetpolfläche 10 bis in eine gewünschte Position ermöglichen (Fig. 3), die zweckmäßig durch einen nicht näher dargestellten Anschlag festgelegt ist.

Wie insbesondere Fig. 4 zeigt, wird der Wickelkörper 14 nach seiner Positionierung auf dem Blechpaket 8 mit der Wicklung 19 versehen, die aus abwechselnd aufeinanderfolgenden Lagen eines Leiters 23 und eines Isolators 24 gebildet wird und zwischen den Montageflanschen 17 zu liegen kommt. Der Leiter 23 besteht z.B. aus einem endlosen, von einer Vorratsspule 25 abgewickelten Aluminiumband, während der Isolator 24 z.B. ein von einer Vorratsspule 26 abgewickelter Streifen aus einer üblichen Isolierfolie ist. Die Abwicklung des Leiters 23 und des Isolators 24 von den Vorratsspulen 25,26 bzw. ihre Aufwicklung auf den Wickelkörper 14 erfolgt in Richtung der in Fig. 4 eingezeichneten Pfeile in an sich bekannter Weise. Alternativ wäre es natürlich auch möglich, die Wicklung 22 auf den Wickelkörper 14 aufzubringen, bevor dieser auf dem Blechpaket 8 montiert wird, oder die hier als Lagenwicklung dargestellte Wicklung in mehrere, untereinander zu verschaltende Scheiben aufzuteilen.

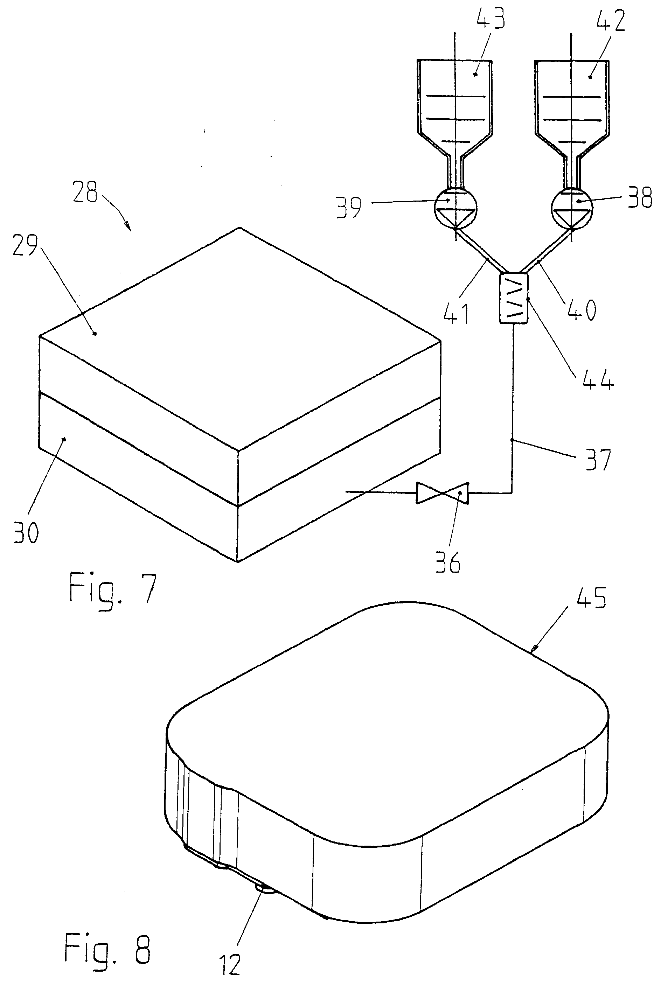

Bei der anhand der Fig. 1 bis 3 beschriebenen Baugruppe in Form eines Magnetkerns werden die einzelnen, lose auf die Stäbe 9 aufgefädelten Bleche 1 lediglich durch die Stäbe 9 und den Wickelkörper 14 in Position gehalten, wobei der Wickelkörper 14 an den Seitenkanten 5,6 der Bleche 1 und an den Vorder- bzw. Rückseiten der Polwangen 12,13 anliegt. Dagegen wird die Wicklung 19 durch die Montageflansche 17 auf dem Magnetkern in Position gehalten. Dabei werden über die Polwangen 12,13 gleichzeitig die Bleche 1 mit einem vorgewählten Druck gegeneinander gepreßt, damit sie dicht aneinander liegen. Zur festen Verbindung aller dieser Teile wird die im wesentlichen aus Fig. 4 ersichtliche Baugruppe in eine Form bzw. ein formgebendes Werkzeug 28 (Fig. 5 bis 7) eingelegt, wobei es sich im Ausführungsbeispiel um ein Werkzeug 28 mit zwei Werkzeug hälften 29 und 30 handelt, die analog zu einem Spritzgußwerkzeug an einander gegenüber liegenden Seiten mit Aussparungen 31,32 versehen sind, die im geschlossenen Zustand des Werkzeugs 28 (Fig. 7) eine Kavität bzw. Formhöhlung bilden, deren Abmessungen nur geringfügig größer als die Außenabmessungen des fertig bewickelten Magnetpols sind.

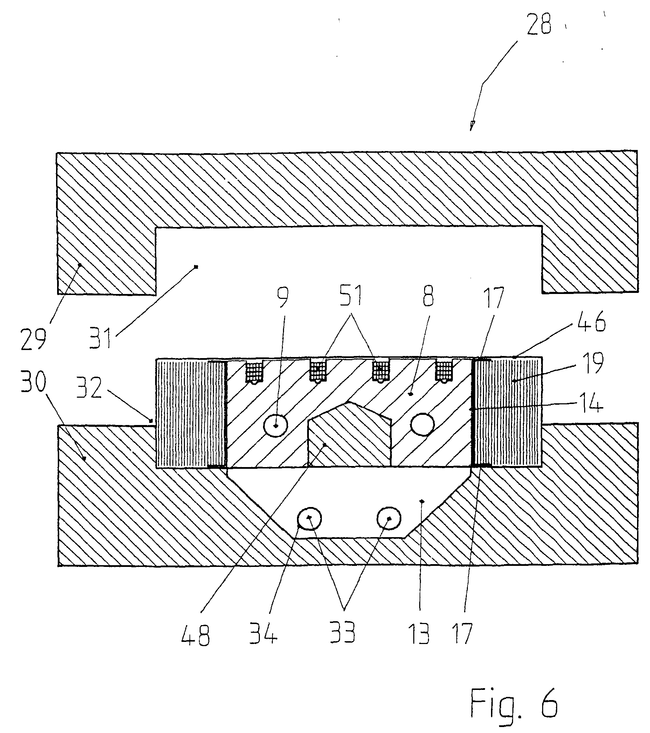

Zur richtigen Positionierung des Magnetpols in der Kavität dienen einerseits z.B. die unteren Montageflansche 17, andererseits bei Bedarf zusätzliche Positionierungsmittel 33. Im Ausführungsbeispiel bestehen diese aus Stäben, die in Löcher 34 (Fig. 2) ragen, die in den Polwangen 12,13 zusätzlich zu den Löchern 16 und an Stellen ausgebildet sind, die in montierten Zustand unterhalb des Wicklungskörpers 14 zugänglich bleiben, wie insbesondere Fig. 6 zeigt. Die Positionierungsmittel 33 sind z.B.in den Seitenwangen der Werkzeughälfte 30 gelagert und werden beim Schließen des Werkzeugs 28 automatisch in die Löcher 34 eingefahren. Weitere, nicht dargestellte Positionierungsmittel können am Boden der Werkzeughälfte 30 angeordnet sein. Auf diese Weise ist es möglich, das Blechpaket 8 und den Wickelkörper 14 relativ zueinander im Werkzeug auszurichten.

Eine der Werkzeughälften 29,30 ist gemäß Fig. 7 mit einer bis zur Kavität reichenden Einlaßöffnung versehen, an die der Ausgang einer mit einem Steuerventil 36 versehenen Leitung 37 angeschlossen ist, die außerdem zwei an je eine Dosierpumpe 38 und 39 angeschlossene Eingänge 40 und 41 aufweist. Den Dosierpumpen 38,39 ist je ein Mischbehälter 42,43 vorgeschaltet und ein in die Leitung 37 geschalteter Mischer 44 nachgeschaltet. Diese Einrichtungen dienen dem Zweck, ein härtbares Gemisch, insbesondere eine Gießharzmischung vorzubereiten und nach dem Schließen des Werkzeugs 28 in die Kavität einzuführen. Dadurch werden in einem einzigen Arbeitsgang mehrere Aufgaben erfüllt. Einerseits werden die lose gestapelten Bleche 1 des Blechpakets 8 durch das Einbringen des Gemischs mit den zwischen ihnen erforderlichen, klebend wirkenden Schichten versehen und gleichzeitig wie bei Anwendung eines Klebers zu einem festen Paket miteinander verbunden. Andererseits wird dieses Paket mit den übrigen Bauelementen der den fertigen Magnetpol (Fig. 8) bildenden Baugruppe 45 zu einer festen Baueinhei miteinander verbunden, die gleichzeitig als Ganzes und insbesondere an den Schnittkanten der Bleche 1 mit einer Korrosionsschutzschicht überzogen wird, die in Fig. 6 schematisch durch eine Linie 46 angedeutet ist. Die vorwählbare Dicke dieser Schicht hängt dabei im wesentlichen von dem Abstand ab, den die verschiedenen Bauelemente der Baugruppe nach dem Einbringen in das Werkzeug voneinander und von den die Kavität begrenzender Wandteilen aufweisen, und kann z.B. bis 10 mm, vorzugsweise 2 bis 3 mm betragen. Außerdem erhält die Baugruppe 45 durch die vollständige Umhüllung mit dem härtbaren Gemisch ihre endgültigen mechanischen, elektromagnetischen und geometrischen Eigenschaften, wozu insbesondere auch die vom Einzelfall abhängige spezielle Ausbildung des Werkzeugs 28 und der die Formhöhlung bildenden Aussparungen 31, 32 beitragen.

Das zu verwendende Gemisch ist vorzugsweise eine härtbare (duroplastische) Gießharzmischung auf Epoxid- oder Polycycloolefinbasis und besteht z.B. aus zwei Komponenten, nämlich z.B. einem im Mischbehälter 42 bereitgestellten, ggf. mit einem Zuschlag versehenen Gießharz, z.B. einem Epoxidharz oder Epoxidharzgemisch, und einem im Mischbehälter 43 bereitgestellten Härter, z.B. einem Epoxidharzhärter. Die beiden Komponenten werden mittels der Dosierpumpen 38, 39 in einem vorgewählten Verhältnis dosiert, in den Mischer 44 eingeleitet, in diesem innig miteinander vermischt und dann von dort über die Leitung 37 und das Steuerventil 36 in die Kavität eingeführt. Dabei erfolgt die Zuführung der Gießharzmischung vorzugsweise unter einem Druck von z.B. 1-3 bar, um insbesondere das Blechpaket 8 so zu durchtränken bzw. zu imprägnieren, daß alle Bleche allseitig in eine dünne Gießharzschicht eingehüllt werden.

Nach dem Füllen der Kavität wird die Gießharzmischung, vorzugsweise unter Erwärmung des gesamten Werkzeugs 28, der Aushärtung überlassen, bis eine Entformung stattfinden und die fertige Baugruppe 45 aus dem Werkzeug 28 herausgenommen werden kann. Alternativ kann das Werkzeug 28 auch bereits vor dem Einbringen der Gießharzmasse erwärmt werden. Am besten ist es außerdem, die Gießharzmasse im Werkzeug 28 nur anzuhärten und die fertigen Baugruppen 45 dann einer Wärmebehandlung (Tempern) zu unterziehen, um z.B. den Aushärtevorgang abzuschließen und/oder langsam flüchtige Bestandteile auszutreiben. Zusätzlich könnte noch ein Reinigungsschritt angeschlossen werden.

Bei einer bisher als am besten empfundenen Ausführungsform der Erfindung wird die Gießharzmischung nach dem Druckgelierverfahren in die Hohlräume zwischen den Blechen 1 und den übrigen Bauelementen der Baugruppe 45 bzw. zwischen diesen und den Wandungen der Formhöhlung eingebracht. Das Druckgelierverfahren ist besonders vorteilhaft, da hierbei der während der Aushärtung auftretende Schwund ausgeglichen wird. Bei diesem auch als Reaktionsharz-Spritzgießen bezeichneten Verfahren (z.B. Kunststoff-Lexikon, Hrg. Dr.-Ing. K. Stoeckhart und Prof. Dr.-Ing. W. Woebcken, Carl Hanser Verlag, München, BRD, 8. Auflage, 1992) können sowohl Reaktionsharzmassen mit langer Topfzeit als auch hochreaktive Harzmassen verwendet werden, die mit Hilfe der Mischbehälter 42, 43 erst kurz vor dem Einspritzen in das Werkzeug 28 automatisch gemischt und dosiert werden. Dabei können die beiden in Fig. 7 gezeigten Eingänge 40, 41 auch in einen Druckbehälter münden, aus dem die fertige Reaktionsharzmischung dann mittels Druckluft in die Leitung 37 gepreßt wird.

Zur Herstellung der Baugruppe 45 eignen sich zahlreiche Gemische, insbesondere solche, die thermisch härtbar sind.

Bevorzugte härtbare Gemische sind Epoxidharz/Härter-Mischungen und Mischungen aus einem gespannten Cycloolefin und einem Katalysator für die ringöffnende Metathese-Polymerisation.

Als Epoxidharze, die erfindungsgemäss eingesetzt werden können, eignen sich alle Typen von Epoxidharzen, wie beispielsweise solche, die direkt an Sauerstoff-, Stickstoff- oder Schwefelatome gebundene Gruppen der Formel 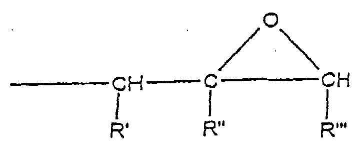 enthalten, worin entweder R' und R"' je ein Wasserstoffatom darstellen, in welchem Fall R" ein Wasserstoffatom oder eine Methylgruppe bedeutet, oder R' und R"' zusammen -CH₂CH₂- oder -CH₂CH₂CH₂- darstellen, in welchem Fall R" ein Wasserstoffatom bedeutet.

Als Beispiele solcher Harze seien Polyglycidylester und Poly(β-methylglycidyl)ester genannt, die man durch Umsetzung einer Verbindung enthaltend zwei oder mehr Carbonsäuregruppen pro Molekül mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere Beispiele sind Polyglycidylether und Poly-(β-methylglycidyl)ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind.

Diese Ether lassen sich mit Poly-(epichlorhydrin) aus acyclischen Alkoholen, wie Ethylenglykol, Diethylenglykol und höheren Poly-(oxyethylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen, wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3, und aus Alkoholen mit aromatischen Kernen, wie N,N-Bis-(2-hydroxyethyl)-anilin und p,p'-Bis-(2-hydroxyethylamino)-diphenylmethan, herstellen. Man kann sie ferner aus einkernigen Phenolen, wie Resorcin und Hydrochinon, sowie mehrkernigen Phenolen, wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan (Bisphenol A) und 2,2-Bis-(3,5-dibrom-4-hydroxyphenyl)-propan, herstellen.

Weitere geeignete Hydroxyverbindungen zur Herstellung von Polyglycidylethern und Poly-(β-methylglycidyl)ethern sind die durch Kondensation von Aldehyden, wie Formaldehyd, Acetaldehyd, Chloral und Furfural, und Phenolen, wie zum Beispiel Phenol, o-Kresol, m-Kresol, p-Kresol, 3,5-Dimethylphenol, 4-Chlorphenol und 4-tert.-Butylphenol, erhältlichen Novolake.

Poly-(N-glycidyl)-verbindungen können beispielsweise durch Dehydrochlorierung der Umsetzungsprodukte von Epichlorhydrin mit mindestens zwei Aminowasserstoffatome enthaltenden Aminen, wie Anilin , n-Butylamin, Bis-(4-aminophenyl)-methan und Bis-(4-methylaminophenyl)-methan, erhalten werden. Weitere geeignete Poly-(N-glycidyl)-verbindungen sind Triglycidylisocyanurat sowie N,N'-Diglycidylderivate von cyclischen Alkylenharnstoffen, wie Ethylenharnstoff und 1,3-Propylenharnstoff, und Hydantoinen, wie zum Beispiel 5,5-Dimethylhydantoin.

Poly-(S-glycidyl)-verbindungen sind zum Beispiel die Di-S-glycidylderivate von Dithiolen, wie Ethan-1,2-dithiol und Bis-(4-mercaptomethylphenyl)-ether.

Beispiele für Epoxidharze mit Gruppen der Formel 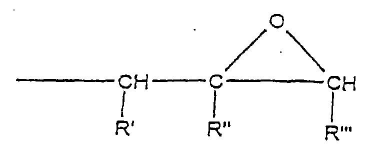 worin R' und R‴ zusammen eine -CH₂CH₂- oder eine -CH₂-CH₂-CH₂-Gruppe bedeuten, sind Bis-(2,3-epoxycyclopentyl)-ether, 2,3-Epoxycyclopentylglycidylether, 1,2-Bis-(2,3-epoxycyclopentyloxy)-ethan und 3,4-Epoxycyclohexylmethyl-3',4'-epoxycyclohexancarboxylat.

In Betracht kommen auch Epoxidharze, in welchen die Glycidylgruppen bzw. β-Methylglycidylgruppen an Heteroatome verschiedener Art gebunden sind, z.B. das N,N,O-Triglycidylderivat des 4-Aminophenols, der Glycidylether/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3)-propan.

Gewünschtenfalls kann man Epoxidharzgemische verwenden.

Bevorzugt werden Diglycidylether von Bisphenolen. Beispiele dafür sind Bisphenol A-diglycidylether, Bisphenol F-diglycidylether und Bisphenol S-diglycidylether. Besonders bevorzugt ist Bisphenol A-diglycidylether.

Ganz besonders bevorzugt sind flüssige und niederviskose Epoxidharze. Zweckmässig übersteigt die Viskosität bei 25 °C einen Wert von 20'000 mPa·s nicht.

In dem erfindungsgemässen Verfahren können im Prinzip sämtliche bekannten Epoxidharzhärter verwendet werden.

Vorzugsweise wird als Epoxidharzhärter eine Carbonsäure oder ein Carbonsäureanhydrid eingesetzt.

Beispiele für geeignete Carbonsäurehärter sind:
aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure , 3,6,9-Trioxaundecandisäure, oder dimerisierte oder trimerisierte Linolsäure;
cycloaliphatische Polycarbonsäuren, wie beispielsweise Tetrahydrophthalsäure, 4-Methyltetrahydrophthalsäure, Hexahydrophthalsäure und 4-Methylhexahydrophthalsäure;
aromatische Dicarbonsäuren, wie Phthalsäure, Isophthalsäure, Terephthalsäure oder Naphthalsäure;
oder Diester-Dicarbonsäuren, die beispielsweise durch Umsetzung von Glykolen, z.B. Polypropylenglykol mit zwei Äquivalenten Dicarbonsäureanhydrid, wie z.B. Tetrahydrophthalsäureanhydrid, erhältlich sind.

Als Anhydridhärter können prinzipiell alle Anhydride von di- und höherfunktionellen Carbonsäuren, wie lineare aliphatische polymere Anhydride und cyclische Carbonsäureanhydride in Frage kommen.

Beispiele für geeignete Anhydridhärter sind:
Polysebacinsäurepolyanhydrid, Polyazelainsäurepolyanhydrid, Bernsteinsäureanhydrid, Citraconsäureanhydrid, Itaconsäureanhydrid, alkenylsubstituierte Bernsteinsäureanhydride, Dodecenylbernsteinsäureanhydrid, Maleinsäureanhydrid, Tricarballylsäureanhydrid, Nadicanhydrid, Methylnadicanhydrid, Linolsäureaddukt an Maleinsäureanhydrid, alkyliert Endoalkylentetrahydrophthalsäureanhydride, Methyltetrahydrophthalsäureanhydrid, Tetrahydrophthalsäureanhydrid, Hexahydrophthalsäureanhydrid, Pyromellitsäuredianhydrid, Trimellitsäureanhydrid, Phthalsäureanhydrid, Tetrachlorphthalsäureanhydrid, Tetrabromphthalsäureanhydrid, Dichlormaleinsäureanhydrid, Chlornadicanhydrid und Chlorendicanhydrid.

Vorzugsweise werden flüssige oder leicht schmelzende Dicarbonsäureanhydride als Epoxidharzhärter eingesetzt.

Besonders bevorzugte Anhydridhärter sind Methylnadicanhydrid, Tetrahydrophthalsäureanhydrid und Methyltetrahydrophthalsäureanhydrid, wobei Methylnadicanhydrid und Methyltetrahydrophthalsäureanhydrid vorzugsweise als Isomerengemisch eingesetzt werden.

Falls gewünscht kann der Anhydridhärter in Kombination mit einem für Anhydridhärter üblichen Reaktionsbeschleuniger eingesetzt werden. Als Reaktionsbeschleuniger eignen sich z.B. tertiäre Amine, Carbonsäuresalze, Metallchelate oder Organophosphine. Bevorzugte Beschleuniger sind die tertiären Amine, wie z.B. N,N-Dimethylbenzylamin, oder substituierte Imidazole.

In einer weiteren bevorzugten Ausführungsform der Erfindung wird als härtbares Gemisch eine Mischung aus einem gespannten Cycloolefin und einem Katalysator für die ringöffnende Metathese-Polymerisation eingesetzt.

Unter gespannten Cycloolefinen sind im Rahmen der vorliegenden Erfindung alle Cycloolefine mit Ausnahme des Cyclohexens und seiner Derivate, die nicht mit der ringöffnenden Metathese polymerisiert werden können, zu verstehen. Geeignete Cycloolefine sind beispielsweise in der WO 96/16100 und der WO 96/20235 beschrieben.

Vorzugsweise wird in dem erfindungsgemässen Verfahren ein Diels-Alder-Addukt von Cyclopentadien eingesetzt.

Besonders bevorzugt sind Tetracyclododecen, Methyltetracyclododecen und insbesondere Dicyclopentadien.

Als Katalysatoren für die ringöffnende Metathese-Polymerisation (ROMP-Katalysatoren) ist dem Fachmann eine grosse Zahl von Verbindungen der Übergangsmetalle Titan, Vanadium, Molybdän, Wolfram, Rhenium, Iridium, Ruthenium und Osmium bekannt. Hierbei handelt es sich beispielsweise um komplexe Metallhalogenide, Metallo-Carbene oder Koordinations-Katalysatoren vom Ziegler-Natta-Typ. Alle diese bekannten ROMP-Katalysatoren können im Prinzip als Komponente (b) in den erfindungsgemässen Zusammensetzungen verwendet werden.

Vorzugsweise wird ein Ruthenium(+II)-Komplexsalz oder ein Osmium(+II)-Komplexsalz, besonders bevorzugt ein Ruthenium(+II)-Komplexsalz, als Komponente (b) verwendet.

Da die Verwendung absolut wasserfreier Substanzen und Apparaturen einen zusätzlichen Aufwand erfordert, empfiehlt es sich, feuchtigkeitsunempfindliche ROMP-Katalysatoren einzusetzen, wie z.B. die in der WO 96/16100 und der WO 96/20235 beschriebenen Ruthenium(+II)-und Osmium(+II)-Komplexsalze.

Besonders bevorzugte ROMP-Katalysatoren sind [(Cyclohexyl)₃P]₂RuCl₂, [(C₆H₅)₃P]₃ RuCl₂, [(C₆H₅)₃P]₃ (CO)RuH₂, [(C₆H₅)₃P]₃ RuCl(Cyclopentadienyl), [(Cyclohexyl)₃P]₂(CH₃OH)Ru(Tosylat)₂, [(o-Tolyl)₃P]₃RuCl₂, [(CH₃)₂CH]₃-P(p-Cymol)RuCl₂ und insbesondere (Cyclohexyl)₃P(p-Cymol)RuCl₂.

Die gewünschte Viskosität des härtbaren Gemisches kann durch Zusatz von thermoplastischen Materialien eingestellt werden. Beispiele für geeignete Thermoplasten sind Polystyrol, Polynorbornen (z.B. Norsorex® NS der Fa. Nippon Zeon), hydrierte Polynorbornenderivate (z.B. Zeonex® der Fa. Nippon Zeon), Polycycloocten (z.B. Vestenamer® der Fa. Hüls) und Polybutadien.

Ein besonderer Vorteil des beschriebenen Verfahrens zur Herstellung der Baugruppe 45 besteht darin, daß die Verfahrensschritte der Durchimprägnierung des lose geschichteten Blechpakets 8, der Umhüllung der übrigen Bauelemente und der gesamten Baugruppe 45 mit einer Korrosionsschicht 46 (Fig. 6) sowie der festen Verbindung aller Teile miteinander in einem einzigen Arbeitsschritt erfolgen können, ohne daß zusätzliche mechanische Verbindungsmittel benötigt werden. Dabei können die Vorgänge der Be- und Entladung des Werkzeugs 28, das Öffnen und Schließen des Werkzeugs 28 und das Füllen der verbleibenden Hohlräume innerhalb der Formhöhlung weitgehend automatisiert werden.

Werden außerdem härtbare Gemische mit elektrisch isolierenden Eigenschaften verwendet, was für die oben genannten Materialien zutrifft, dann ergibt sich der weitere Vorteil, daß die Bleche 1 in dem einzigen genannten Arbeitsschritt auch mit einer elektrisch isolierenden Schicht umhüllt werden, so daß im Prinzip auch völlig unvorbehandelte, keine Isolierschichten aufweisende Elektrobleche als Ausgangsmaterialien verwendet werden können.

Ein weiterer überragender Vorteil der Erfindung besteht in diesem Fall darin, daß die einzelnen Bleche 1 des Blechpakets 8 in einem zwar völlig unvorbehandelten, aber dennoch gestapelten und dicht gepackten Zustand in das Werkzeug 28 eingegeben werden können. Aufgrund der natürlichen Oberflächenrauheit im Bereich ihrer Breitseiten 7 verbleiben zwischen den Blechen 1 auch im gestapelten, dicht gepackten Zustand ausreichend viele und große Hohlräume, die sich beim Eindringen des Gemischs in das Werkzeug 28 mit diesem Gemisch füllen, das dann im erhärteten Zustand ohne Bildung schädlicher Blasen oder dgl. die erforderliche Isolierung zwischen den einzelnen Blechen 1 bewirkt. Diese Wirkung kann noch dadurch verbessert und optimiert werden, daß die Kavität vor dem oder beim Einspritzen des Gemischs zumindest teilweise evakuiert wird, um einen geringen, ggf. durch Versuche zu ermittelnden Unterdruck von z.B. 2 bis 10 Millibar herzustellen und das Gemisch dadurch zusätzlich in die Kavität hineinzusaugen, wodurch gleichzeitig die Notwendigkeit entfällt, die noch in der Kavität befindliche Luft mit Hilfe des Gemischs zu verdrängen.

Vorteilhaft ist schließlich auch, daß die äußere Form der Baugruppe 45 weitgehend unabhängig von der durch Stanzen hergestellten Form der einzelnen Bleche 1 und der um diese gelegten Wicklung 19 gewählt werden kann. Insbesondere kann durch entsprechende Ausbildung der Formhöhlung sichergestellt werden, daß die äußere Korrosionsschicht ausreichend dick und umweltbeständig ist, während gleichzeitig durch die Stapelung der Bleche 1 und den zu ihrer Verspannung verwendeten Druck die erwünschten dünnen Kleb- und ggf. Isolierschichten zwischen den einzelnen Blechen 1 herstellbar sind.

Die Ausführungsform nach Fig. 1 bis 8 kann auf vielfache Weise modifiziert und/oder ergänzt werden. Wenn die Baugruppen 45 beispielsweise dem Zweck dienen, einen Wechselpolmagneten für das Magnetschwebefahrzeug herzustellen (DE 34 10 119 A1), dann können die einzelnen Bleche 1 zur Reduzierung des Gewichts in einem mittleren, unteren Bereich mit je einer Aussparung 47 (Fig. 1) versehen werden, da dieser Abschnitt aus magnetischen Gründen nicht benötigt wird. In die dadurch im gestapelten Blechpaket 8 entstehende Nut kann beim Gießvorgang ein Kern 48 (Fig. 6) eingelegt werden, so daß die Nut nicht mit Gemisch gefüllt wird und allenfalls die sie begrenzenden Wandungen mit einer dünnen Korrosionsschicht versehen werden. Weiter ist es möglich, die Bleche 1 an ihren Oberseiten 3 beim Stanzen mit Ausnehmungen 49 (Fig. 1) zu versehen, die im gestapelten Zustand Nuten 50 (Fig. 2) bilden, die an die Magnetpolfläche 10 grenzen und in die gemäß Fig. 5 und 6 zusätzliche Wicklungen 51 eingelegt werden können, die beim Betrieb des Magnetschwebefahrzeugs einen an sich bekannten Lineargenerator bilden. Auch diese Wicklungen 51 bilden ein Bauelement, das durch das Eindringen der Formmasse fest mit der übrigen Baugruppe 45 verbunden und ggf. mit einer zusätzlichen Schutzschicht versehen wird. Schließlich kann vorgesehen werden, die Unterseiten 4 (Fig. 1) der Bleche 1 bzw. des gesamten Blechpakets und/oder die Unterseiten der Polwangen 12, 13 von Gemisch frei zu halten. Hierzu wird z.B. die Kavität des Werkzeugs 28 so ausgebildet, daß die genannten Unterseiten nach dem Anordnen der verschiedenen Bauelemente im Werkzeug 28 unmittelbar an entsprechenden Wandteilen anliegen. Da die Unterseiten der Blechpakete und/oder der Polwangen 12,13 in einem fertigen, meistens aus einer Mehrzahl derartiger Magnetpole bestehenden Magneten durch unterhalb der Wicklungen 19 angeordnete, ferromagnetische Polrücken magnetisch miteinander verbunden werden, wird auf diese Weise sichergestellt, daß in den Grenzflächen zwischen den Magnetpolen und den Magnetrücken keine magnetisch schädlichen, durch eingeschlossenes Gemisch gebildeten Spalte entstehen.

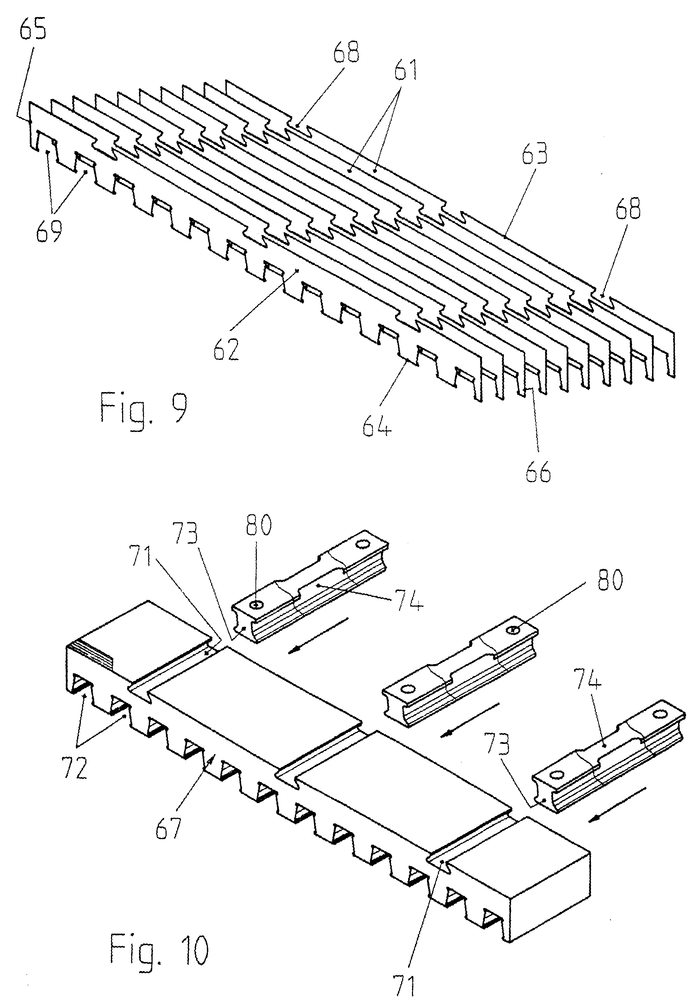

Fig. 9 bis 15 zeigen die Herstellung eines Statorpakets für den Langstator-Linearmotor eines Magnetschwebefahrzeugs. Das Statorpaket enthält analog zu Fig. 1 bis 8 eine Vielzahl von Blechen oder Lamellen 61, von denen in Fig. 9 nur einige gezeigt sind und die durch Ausstanzen aus einem rohen, keine Klebmittelschicht aufweisenden, ferromagnetischen Blechstreifen erhalten werden. Die Bleche 61 haben im Ausführungsbeispiel identische Abmessungen und weisen je eine vordere und hintere Breitseite 62 und in Umfangsrichtung je eine schmale Oberseite 63, Unterseite 64 und zwei Seitenkanten 65 und 66 auf. Die Bleche 61 werden mit nicht näher dargestellten Hilfsmitteln zu Blechpakten 67 (Fig. 10) gestapelt, indem sie mit ihren vorderen bzw. hinteren Breitseiten 62 aneinandergelegt und bündig aufeinander ausgerichtet werden. Die Zahl der verwendeten Bleche 61 hängt dabei von den für den Langstator-Linearmotor geforderten elektrischen und magnetischen Eigenschaften ab.

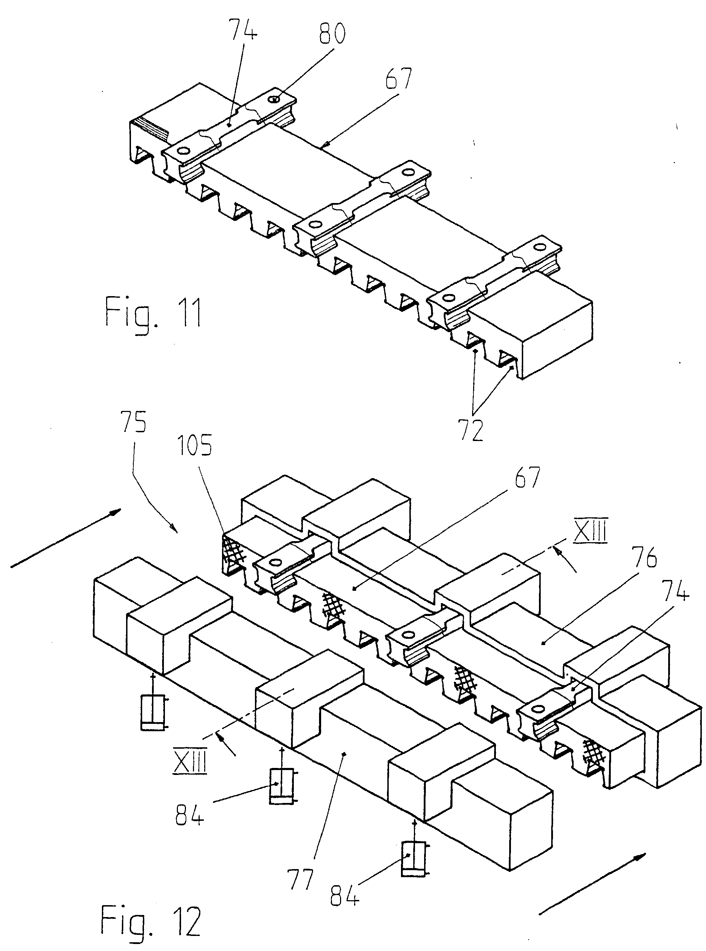

Die Bleche 61 werden bei ihrer Herstellung durch Stanzen an ihren Oberseiten 63 mit Aussparungen 68 und an ihren Unterseiten 64 mit Aussparungen 69 versehen. Nach der Stapelung der Bleche 61 zum Blechpaket 67 (Fig. 10) bilden die Aussparungen 68 jeweils Nuten 71 und die Aussparungen 69 jeweils Nuten 72. Die zu den Oberseiten 63 hin offenen Aussparungen 68 und Nuten 70 besitzen z.B. einen schwalbenschwanzförmigen Querschnitt und dienen zur Aufnahme von entsprechend geformten Fußabschnitten 73, die an gerade, im Querschnitt im wesentlichen doppel-T-förmig ausgebildete Traversen 74 angeformt sind. Dagegen besitzen die zu den Unterseiten 64 hin offenen Aussparungen 69 und Nuten 72 im wesentlichen rechteckige bzw. quadratische Querschnitte. Nach der Stapelbildung werden die Fußabschnitte 73 der Traversen 74 in Richtung der in Fig. 10 dargestellten Pfeile in die Nuten 71 des Blechpakets 67 eingeschoben und in diesen zentriert angeordnet, so daß die aus Fig. 11 ersichtliche, lose vormontierte Baugruppe entsteht. Alternativ könnten die Bleche 61 natürlich auch einzeln auf die entsprechend positionierten Traversen 74 aufgefädelt werden.

Die fertig montierte Baugruppe wird nun analog zu der Baugruppen nach Fig. 4 in ein Werkzeug 75 (Fig. 12 bis 14) eingelegt, das im Ausführungsbeispiel zwei Werkzeughälften 76, 77 aufweist, die an einander gegenüberliegenden Seiten mit Aussparungen 78, 79 versehen sind, die im geschlossenen Zustand des Werkzeugs 75 eine Formhöhlung bzw. Kavität bilden, deren Abmessungen geringfügig größer als die Außenabmessungen der eingelegten Baugruppe sind.

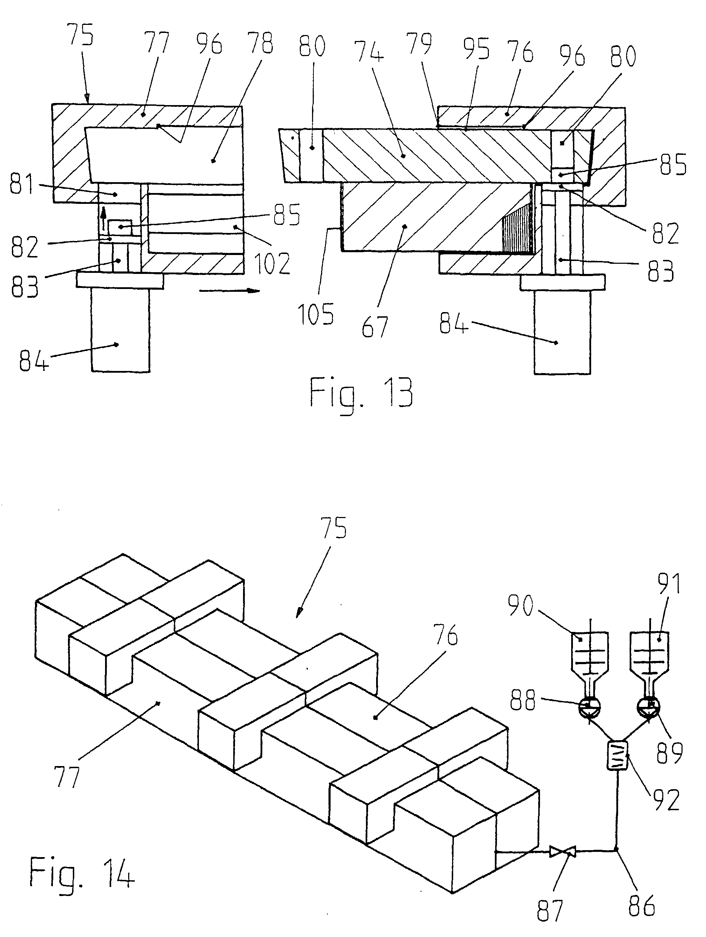

Die Traversen 74 sind an ihren Enden, die geringfügig über das Blechpaket 67 überstehen, mit zur Aufnahme von Befestigungsschrauben bestimmten Bohrungen 80 versehen. Damit diese beim Füllen der Kavität mit härtbarem Gemisch frei bleiben, sind die Werkzeughälften 76, 77 dort, wo die Bohrungen 80 zu liegen kommen, mit Löchern 81 versehen, in die Verriegelungskolben 82 einführbar sind. Diese sind an den Enden der Kolbenstangen 83 je eines an der zugehörigen Werkzeughälfte 76, 77 befestigten, pneumatischen oder hydraulischen Zylinders 84 befestigt, der im linken Teil der Fig. 13 im zurückgezogenen und im rechten Teil der Fig. 13 im ausgefahrenen Zustand dargestellt ist. Im ausgefahrenen Zustand legt sich der Verriegelungskolben 82 z.B. an die Unterseite der Traverse 74 und an einen die zugehörige Bohrung 80 umgebenden Randabschnitt an, wodurch das eine Ende der Bohrung 80 verschlossen ist. Gleichzeitig drückt der Verriegelungskolben 82 die Traverse 74 fest gegen einen gegenüberliegenden Wandabschnitt der zugehörigen Werkzeughälfte, der dadurch das andere Ende der Bohrung 80 verschließt, so daß in sie kein Gemisch eindringen kann. Bei Bedarf kann an die Verriegelungskolben 82 und/oder die gegenüberliegende Wand noch je ein in die Bohrung 80 eintretender Verschlußstopfen 85 angesetzt sein.

Die Kolben 82 bewirken außerdem eine Positionierung der Traversen 74 relativ zum Werkzeug 75. Bei Bedarf können zusätzliche, nicht näher dargestellte Positionierungsmittel z.B. am Boden des Werkzeugs 75 vorgesehen sein, die das Blechpaket 67 relativ zum Werkzeug 75 und relativ zu den Traversen 74 positionieren. Schließlich können falls erforderlich, den Zylindern 84 entsprechende oder andere Mittel vorgesehen werden, die z.B. durch Seitenwände des Werkzeugs 75 hindurch auf das Blechpaket 67 einwirken, um dessen Bleche 61 dicht aneinander anzulegen.

Nach dem Schließen des Werkzeugs 75 in Richtung des in Fig. 13 eingezeichneten Pfeils und nach dem Ausfahren des Kolbenstangen 83 in die im rechten Teil der Fig. 13 gezeigte Position wird ein Gemisch in die Kavität eingebracht, wozu das Werkzeug 75 analog zu Fig. 7 mit einer bis zur Kavität reichenden Einlaßöffnung versehen wird, die mittels einer Leitung 86 (Fig. 14) mit einem Steuerventil 87 und über Dosierpumpen 88, 89 an Mischbehälter 90, 91 angeschlossen wird, die ein Reaktionsharz bzw. einen Härter oder dgl. enthalten, um daraus das Gemisch zuzubereiten. In einem Mischer 92 werden die mit den Dosierpumpen 88,89 dosierten Reaktionsharz- und Härterasnteile gemischt. Die Verfahrensschritte des Einbringens des Gemischs in die Kavität, des Härtens bzw. Anhärtens des Gemischs, des Temperns und ggf. des Reinigens sind analog zum Ausführungsbeispiel nach Fig. 1 bis 8 und brauchen daher nicht noch einmal beschrieben werden. Dasselbe gilt für die anwendbaren Gemische, insbesondere Gießharzmischungen, deren Zubereitung, die bevorzugte Einspritzung des Gemischs unter einem Druck von z.B. 1 bis 3 bar, die vorzugsweise zusätzliche Evakuierung der Kavität und die bevorzugte Anwendung des Druckgelierverfahrens.

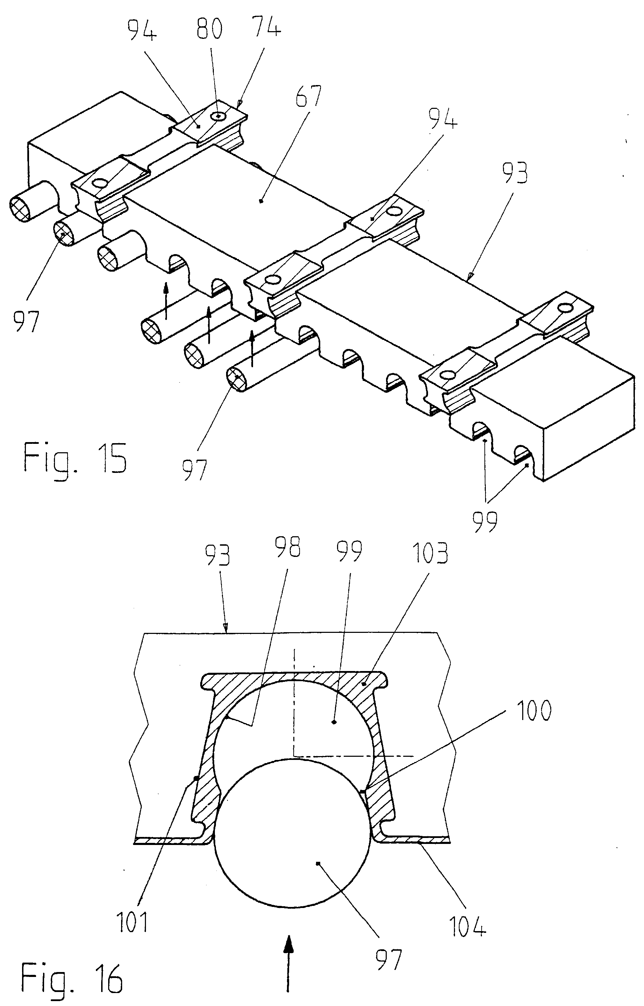

Nach der Entformung wird die aus Fig. 15 ersichtliche, fertige Baugruppe 93 in Form eines Statorpakets erhalten.

Wie bei der Herstellung der Baugruppe 45 ergibt sich auch beim Ausführungsbeispiel nach Fig. 9 bis 15 der Vorteil, daß die Durchimprägnierung des lose geschichteten, aus nicht besonders vorbehandelten Blechen 61 bestehenden Blechpakets 67, die Umhüllung der übrigen Bauelemente und des gesamten Statorpakets mit einer Korrosionsschutzschicht sowie die feste Verbindung aller Teile miteinander in einem einzigen Verfahrensschritt erfolgen können und sich die dazu erforderlichen Vorgänge weitgehend automatisieren lassen. Schließlich kann auch die äußere Form der fertigen Baugruppe 93 weitgehend unabhängig von der Stanzform der einzelnen Bleche 61 gewählt werden, wie nachfolgend anhand einiger möglicher Abwandlungen erläutert wird.

Die Baugruppe 93 wird in bekannter Weise (DE 39 28 277 C1) mit Hilfe der Bohrung 80 und in diese eingeführter Befestigungsschrauben an Anschlußkörpern des Fahrbahnträgers einer Magnetschwebebahn befestigt. Dabei dienen an der Oberseite der Traversen 74 befindliche, die Bohrungsenden umgebende Flächenabschnitte 94, die in Fig. 15 schraffiert dargestellt sind, als Anschlag- bzw. Referenzflächen, die die genaue Lage der Traversen 74 und damit der gesamten Baugruppe 93 zum Fahrbahnträger festlegen. Diese Flächenabschnitte 94 werden vorzugsweise nicht mit einer Isolier- oder Korrosionsschutzschicht belegt, um Ungenauigkeiten in der Positionierung, ein Abdrehen oder Setzen dieser Schicht beim Festziehen der Befestigungsschrauben und ggf. ein dadurch bedingtes Lösen der Befestigungsschrauben beim späteren Betrieb der Magnetschwebebahn zu vermeiden. Zu diesem Zweck drücken die Verriegelungskolben 82 die in Fig. 15 schraffierten Flächenabschnitte 94 so gegen eine entsprechend ausgebildete Wand des Werkzeugs 75, daß sich dort kein Gemisch absetzen kann, während an der übrigen Stellen der gesamten Baugruppe 93 zwischen ihr und den Wänden des Werkzeugs 75 stets ein schmaler Zwischenraum 95 (Fig. 13) verbleibt, der die Bildung einer äußeren, insbesondere dem Korrosionsschutz dienenden Schicht aus dem Gemisch ermöglicht. Dies wird am einfachsten durch entsprechende Stufen 96 in den die Kavität bildenden Wandungen erreicht.

Die unteren Nuten 72 des Blechpakets 67 dienen in ebenfalls bekannter Weise der Aufnahme der im wesentlichen aus elektrischen Leitungen 97 (Fig. 15 und 16) bestehenden Stränge einer Dreiphasen-Wechselstromwicklung (DE 31 10 339 C2, DE 33 03 961 C2). Zur Vereinfachung der Montage und der Lagefixierung der Leitungen 97 besitzen Wandungen 98 der entsprechenden Nuten 99 in der fertigen Baugruppe 93 zweckmäßig eine Form, die es ermöglicht, die Leitungen 97 unter geringfügiger elastischer Verformung in Richtung der eingezeichneten Pfeile in die Nuten 99 einzudrücken und dadurch ohne weiter Hilfsmittel nach Art einer Schnappverbindung in der Baugruppe 93 zu fixieren. Zu diesem Zweck sind die Wandungen 98 zweckmäßig durch Schlitze 100 nach unten geöffnet, die an ihrer engsten Stelle eine kleinere Breite aufweisen, als dem Durchmesser der Leitungen 97 entspricht. Eine solche Nutform entspricht jedoch im allgemeinen nicht der Form der Nuten 72 des Blechpakets 67. Diese Nuten 72 besitzen vielmehr aus elektrischen und/oder magnetischen und für den Betrieb der Magnetschwebebahn maßgeblichen Gründen sowie zwecks Erzielung eines minimalen Verschnitts beim Stanzvorgang die vor allem aus Fig. 9 und 10 ersichtliche Form, die in Fig. 16 durch eine zusätzlich eingezeichnete Linie 101 angedeutet ist. Um beiden Funktionen gerecht zu werden, wird das Werkzeug 75 (Fig. 13) zweckmäßig mit einer Vielzahl von Kernen 102 (Fig. 13) versehen, die beim Positionieren des Blechpakets 67 in der Kavität bzw. beim Schließen des Werkzeugs in die einzelnen Nuten 72 eingeführt werden. Die Form dieser Kerne 102 wird entsprechend der Form gewählt, die die endgültigen Nuten 99 aufweisen sollen, so daß die Wandungen der im Blechpaket 67 vorhandenen Nuten 72 beim Einbringen des härtbaren Gemischs mit einer in Fig. 16 schraffiert dargestellten, vergleichsweise dicken Auskleidungen 103 versehen werden, die im fertigen Zustand der Baugruppe 93 zu den gewünschten Formen der Wandungen 98 führen. Die übrige aufgebrachte Korrosionsschutzschicht kann dagegen vergleichsweise dünn gehalten werden, wie z.B. in Fig. 16 durch das Bezugszeichen 104 dargestellt ist.

Auch im Hinblick auf die fertige Baugruppe 93 gilt somit, daß durch Einbringen des Gemischs in einem einzigen Arbeitsgang einerseits die Bleche 61 mit der gegenseitigen Verbindung dienenden Schichten versehen und zu einem fertigen Blechpaket 67 miteinander verbunden werden, während andererseits das Blechpaket 67 zusammen mit weiteren Bauelementen (Traversen 74) zu einer fertigen Baugruppe 93 (Statorpaket) verbunden wird. Außerdem werden bei Anwendung des erfindungsgemäßen Verfahrens die endgültigen elektrischen, magnetischen, mechanischen und/oder geometrischen Eigenschaften der Blechpakete bzw. Baugruppen zumindest teilweise erst durch die Behandlung aller Bauteile mit dem Gemisch in einem Werkzeug erhalten, insbesondere, wenn ein härtbares Gemisch mit ausreichend elektrisch isolierenden Eigenschaften verwendet wird. Dies gilt insbesondere im Hinblick auf die Anbringung der Isolierschichten für die einzelnen Bleche, den äußeren Korrosionsschutz, die dauerhafte Verbindung der verschiedenen Teile miteinander und die endgültige äußere Form der umhüllten Blechpakete, Baugruppen oder Teilen davon, z.B. der Nuten 99. Besonders vorteilhaft ist außerdem, daß weder zur Positionierung noch zur Verbindung der Einzelteile zusätzliche Verbindungsmittel wie z.B. Schrauben, Nieten, Kleber oder dgl. benötigt werden und die mechanische Festigkeit und Umweltbeständigkeit durch die Dicke der äußeren Umhüllung mit dem Gemisch festgelegt werden kann.

Wie insbesondere Fig. 12 zeigt, kann es weiterhin zweckmäßig sein, die in das Werkzeug gegebenen Blechpakete oder Baugruppen an bestimmten Stellen, z.B. an ihren Außenseiten, mit einem aus einem porösen Material bestehenden Abstandselement 105, z.B. einer aus Kunststoff-Fäden oder dgl. hergestellten, gewebten Matte zu belegen, die das Blechpaket 67 oder dgl. in einem gewünschten Abstand von den Wandungen der Formhöhlung hält. Derartige Elemente oder Matten werden beim Einspritzvorgang vollständig mit dem Gemisch durchtränkt, so daß beim Aushärten eine stabile, feste Kunstharzschicht entsteht, die eine mechanisch feste Außenwand an der fertigen Baugruppe 93 bildet und deren mechanische Stabilität vergrößert.

Zur Verbesserung der elektrischen Eigenschaften (Dielektrizitätskonstante, Verlustfaktor) können den härtbaren Mischungen Silane, z.B. die von der Fa. Osi Specialties unter der Bezeichnung Silquest® Silan angebotenen Verbindungen, zugesetzt werden. Geeignete Silane sind beipsielsweise Octyltriethoxysilan, Methyltriethoxysilan und Vinyltriethoxysilan.

Außerdem können die härtbaren Mischungen Füllstoffe wie beispielsweise Metallpulver, Holzmehl, Glaspulver, Glaskugeln oder Halbmetall- und Metalloxide enthalten. Bevorzugte Füllstoffe sind Wollastonit, Al₂O₃ und SiO₂, wobei von den verschiedenen SiO₂-Modifikationen Quarzmehl besonders bevorzugt ist.

Neben den oben erwähnten Additiven können die härtbaren Gemische weitere übliche Zusatzstoffe wie z.B. Antioxidantien, Lichtschutzmittel, Weichmacher, Farbstoffe, Pigmente, Thixotropiemittel, Zähigkeitsverbesserer, Entschäumer, Antistatika, Gleitmittel und Entformungshilfsmittel enthalten.

Im übrigen werden die härtbaren Gemische nach bekannten Methoden hergestellt, üblicherweise mit Hilfe bekannter Mischaggregate (Rührer, Kneter, Walzen, Mühlen, Trockenmischer oder Dünnschichtentgasungsmischer). Die verschiedenen Verfahren zur Herstellung von Gemischen sind dem Fachmann bekannt und beispielsweise in Becker/Braun: "Kunststoff-Handbuch, Band 10, Duroplaste", Carl Hanser Verlag 1988, Seiten 515 ff. und 825 ff., beschrieben.

Ist es erwünscht, die einzelnen Bleche 1,61 in anderer als der oben erläuterten Weise zu stapeln, können sie auch mit geeigneten Hilfsmitteln, z.B. Spacern, so an den Enden fixiert werden, daß die Abstände zwischen den einzelnen Blechen ungefähr gleich sind. Dabei kommt es nicht darauf an, daß die Abstände zwischen allen Blechen exakt gleich sind. Es muß lediglich genügend Raum für den Eintritt der isolierenden Harzmasse in die Zwischenräume zwischen den einzelnen Blechen 1,61 vorhanden sein. Der Abstand der Bleche 1 kann auf diese Weise z.B. auf 1 µm bis 100 µm vorzugsweise auf 2 µm bis 5 µm eingestellt werden.

Die bei den erfindungsgemäßen Verfahren verwendbaren Metallbleche sind vorzugsweise Stahlbleche, obwohl auch andere ferromagnetische Materialien eingesetzt werden können.

Die Erfindung ist nicht auf die beschriebenen Ausführungsbeispiele beschränkt, die sich auf vielfache Weise abwandeln lassen. Insbesondere versteht sich, daß die beschriebenen Magnetpole und Statorpakete auch mit anderen, nicht näher erläuterten Bauelementen, z.B. mit nach außen führenden elektrischen oder mechanischen Anschlüssen, versehen werden können, die ebenfalls durch das umhüllende Gemisch fixiert und/oder gebildet werden.

## Patentansprüche

1. Verfahren zur Herstellung einer elektromagnetischen Baugruppe (45, 93) in Form eines Magnetpols oder Statorpakets eines Langstator-Linearmotors für eine Magnetschwebebahn, wobei diese Baugruppe wenigstens ein aus ferromagnetischem Material bestehendes Blechpaket (8, 67) und wenigstens ein weiteres Bauelement (12, 13, 14, 74) enthält, dadurch gekennzeichnet, daß das Blechpaket (8, 67) aus rohen Elektroblechen (1, 61) zusammengesetzt und zusammen mit dem weiteren Bauelement (12, 13, 14, 74) ggf. unter Anwendung von Positionierhilfen in einem Werkzeug (28, 75) positioniert wird und daß dann durch Einbringen eines härtbaren Gemischs in das Werkzeug (28, 75) und An- oder Aushärten des Gemischs nach dem Druckgelierverfahren in einem einzigen Arbeitsschritt die Bleche (1, 61) dadurch zum fertigen Blechpaket (8, 67) miteinander verbunden werden, daß das Gemisch in die Zwischenräume zwischen den Blechen eintritt, ferner das Blechpaket (8, 67) mit dem Bauelement (12, 13, 14, 74) verbunden wird und die Baugruppe (45, 93) unter Ausbildung ihrer endgültigen elektrischen, magnetischen, mechanischen und/oder geometrischen Eigenschaften mit dem Gemisch umhüllt wird.

2. Verfahren nach Anspruch 1, dadurch gekennzeichnet, daß im Werkzeug (28, 75) ein Druck von 2 - 10 mbar aufrechterhalten wird.

3. Verfahren nach Anspruch 1 oder 2 zur Herstellung einer elektromagnetischen Baugruppe (45) in Form eines Magnetpols für einen Langstator-Linearmotor, dadurch gekennzeichnet, daß die Bleche (1) mit Löchern (7) versehen und mit diesen zur Bildung eines Blechpaketstapels auf Stäbe (9) aufgefädelt werden.

4. Verfahren nach Anspruch 3, dadurch gekennzeichnet, daß das Blechpaket (8) vor dem Einbringen in das Werkzeug (28) an seinen Stirnseiten mit je einer lose angesetzten Polwange (12, 13) versehen wird.

5. Verfahren nach Anspruch 3 oder 4, dadurch gekennzeichnet, daß das Blechpaket (8) vor dem Einbringen in das Werkzeug (28) mit einer lose aufgebrachten Wicklung (19) versehen wird.

6. Verfahren nach einem der Ansprüche 3 bis 5, dadurch gekennzeichnet, daß die Bleche (1) vor der Bildung des Blechpaketstapels mit zur Herstellung eines Lineargenerators bestimmten Ausnehmungen (49) versehen und in die dadurch nach der Bildung des Blechpaketstapels entstehenden Nuten (50) Wicklungen (51) lose eingelegt werden.

7. Verfahren nach einem der Ansprüche 1 bis 6, dadurch gekennzeichnet, daß beim Einbringen des Gemischs eine Unterseite des Blechpakets (8) und/oder der Polwangen (12, 13) zumindest teilweise vom Gemisch freigehalten wird.

8. Verfahren nach Anspruch 1 oder 2 zur Herstellung einer elektromagnetischen Baugruppe (93) in Form eines Statorblechpakets für einen Langstator-Linearmotor, dadurch gekennzeichnet, daß die Bleche (61) an ihrer Oberseite (63) mit Aussparungen (68) versehen werden, die nach dem Zusammensetzen des Blechpakets (67) wenigstens eine Nut (71) bilden, und daß vor dem Einbringen des Gemischs in das Werkzeug (75) eine der Montage der Baugruppe (93) dienende Traverse (74) in die Nut (71) eingesetzt wird.

9. Verfahren nach Anspruch 8, dadurch gekennzeichnet, daß die Traverse (74) beim Einbringen des Gemischs an wenigstens einer Oberfläche (94) vom Gemisch freigehalten wird.

10. Verfahren nach Anspruch 8 oder 9, dadurch gekennzeichnet, daß die Bleche (61) vor der Bildung eines Blechpaketstapels an ihrer Unterseite (64) mit Aussparungen (69) versehen werden, die nach der Bildung des Blechpaketstapels wenigstens eine zur Aufnahme einer elastisch verformbaren, elektrischen Leitung (97) bestimmte Nut (72) bilden, die einen in Abhängigkeit von den gewünschten elektromagnetischen Eigenschaften des Blechpakets (67) gewählten Querschnitt besitzt, und daß die Wandung der Nut (72) durch das Einbringen des Gemischs mit einer aus dieser bestehenden Auskleidung (102) versehen wird, so daß eine mechanisch wirksame Nut (97) entsteht, deren Wandung (98) einen in Abhängigkeit von der Leitung (97) gewählten Querschnitt aufweist.

11. Verfahren nach Anspruch 10, dadurch gekennzeichnet, daß der endgültige Querschnitt derart gewählt wird, daß die Nutenwandungen (98) nach außen durch Schlitze (100) geöffnet sind, die an ihrer engsten Stelle eine kleinere Breite aufweisen, als dem Außendurchmesser der Leitungen (97) entspricht.

12. Verfahren nach einem der Ansprüche 1 bis 11, dadurch gekennzeichnet, daß als härtbares Gemisch ein thermisch härtbares Gemisch verwendet wird.

13. Verfahren nach einem der Ansprüche 1 bis 12, dadurch gekennzeichnet, daß zur Herstellung des Blechpakets (8, 67) rohe, unvorbehandelte Bleche verwendet werden und die gegenseitige elektrische Isolierung zwischen den Blechen (8,67) durch Anwendung eines härtbaren Gemischs mit elektrisch isolierenden Eigenschaften hergestellt wird.

## Claims

1. A method of making an electromagnetic component (45, 93) in the form of a magnet pole or stator pack of a longitudinal stator linear motor for a magnetically levitated railway, wherein this component includes at least one lamination pack (8, 67) consisting of ferromagnetic material and at least one further component (12, 13, 14, 74), characterized in that the lamination pack (8, 67) composed of raw core plates (1, 61) is positioned together with the further component (12, 13, 14, 74) in a tool (28, 75), optionally with the use of positioning aids, in that the laminations are then so bonded together as to form the finished lamination pack (8, 67) by introduction of the a hardenable mix to the tool (28, 75) and hardening or curing the mix by the pressure gelling method in a single working step, so that the mix enters the interstices between the laminations, the lamination pack (8, 67) is further bonded to the component (12, 13, 14, 74) and the component (45, 93) is sheathed in the mix with formation of its final electrical, magnetic, mechanical and/or geometrical properties.

2. A method according to claim 1, characterized in that a pressure of 2- 10 mbar is maintained in the tool (28, 75).

3. A method according to claim 1 or 2 for making an electromagnetic component (45) in the form of a magnet pole for a longitudinal stator linear motor, characterized in that the laminations (1) are provided with holes (7) and are threaded with these on rods (9) to form a lamination pack stack.

4. A method according to claim 3, characterized in that the lamination pack (8) is provided on each of its end faces with a loose fitted pole cheek (12, 13) before introduction to the tool (28).

5. A method according to claim 3 or 4, characterized in that the lamination pack (8) is provided with a loosely applied winding (19) before introduction to the tool (28).

6. A method according to any of claims 3 to 5, characterized in that the laminations (1) are provided before the formation of the lamination pack stack with recesses (49) adapted to the production of a linear generator and in the grooves (50) which arise therefrom after the formation of the lamination pack stack windings (51) are loosely inserted.

7. A method according to any of claims 1 to 6, characterized in that an underside of the lamination pack (8) and/or the pole cheeks (12, 13) are at least partially kept free from the mix during the introduction of the mix.

8. A method according to claim 1 or 2 for making an electromagnetic component (93) in the form of a stator lamination pack for a longitudinal stator linear motor, characterized in that the laminations (61) are provided with cut-outs (68) at their upper sides (63), to form at least one groove (71) after assembling the lamination pack (67), and in that a cross-piece (74) serving for mounting the component (93) is inserted into the groove (71) before the introduction of the mix in the tool (75).

9. A method according to claim 8, characterized in that the cross-piece (74) is kept free from the mix on at least one surface (94) during the introduction of the mix.

10. A method according to claim 8 or 9, characterized in that the laminations (61) are provided with cut-outs (69) on their underside (64) before formation of a lamination pack stack, to form at least one groove (72) adapted to receive an elastically deformable, electric conductor (97) after the formation of the lamination pack stack, the conductor having a cross-section selected in accordance with the desired electromagnetic characteristics of the lamination pack (67), and in that the wall of the groove (72) is provided by the introduction of the mix with a cladding (102) consisting of this, so that a mechanically effective groove (97) results, whose wall (98) has a cross-section selected in dependence on the conductor (97).

11. A method according to claim 10, characterized in that the final cross-section is so selected that the groove walls (98) are open to the outside via slots (100) which have a smaller width at their narrowest point than the external diameter of the conductors (97).

12. A method according to any of claims 1 to 11, characterized in that a thermosetting mix is used as the hardenable mix.

13. A method according to any of claims 1 to 12, characterized in that raw, un-pretreated laminations are used for making the lamination pack (8, 67) and the mutual electrical insulation between the laminations (8, 67) is produced by use of a hardenable mix with electrically insulating properties.

## Revendications

1. Procédé de fabrication d'un module électromagnétique (45, 93) sous la forme d'un pôle magnétique ou d'un empilage de tôles du stator d'un moteur linéaire à stator long pour un train à sustentation magnétique, ce module comprenant au moins un empilage (8, 67) de tôles en matière ferromagnétique et au moins un autre élément de construction (12, 13, 14, 74), caractérisé en ce que l'empilage (8, 67) de tôles est composé de tôles électriques (1, 61) brutes et est positionné dans un outil (28, 75) conjointement avec l'autre élément de construction (12, 13, 14, 74), le cas échéant en utilisant des accessoires de positionnement, et en ce que par l'introduction d'un mélange durcissable dans l'outil (28, 75) et la prise ou le durcissement du mélange, après le procédé de gélification sous pression en une seule opération, les tôles (1, 61) sont de ce fait reliées les unes avec les autres pour former l'empilage (8, 67) de tôles fini, en ce que le mélange pénètre dans les espaces entre les tôles, l'empilage de tôles (8, 67) est de surcroît relié avec l'élément de construction (12, 13, 14, 74) et le module (45, 93) est enrobé avec le mélange en acquérant ses propriétés électriques, magnétiques, mécaniques et / ou géométriques définitives.

2. Procédé selon la revendication 1, caractérisé en ce qu'une pression de 2 - 10 mbars est maintenue dans l'outil (28, 75).

3. Procédé selon la revendication 1 ou 2 pour la fabrication d'un module électromagnétique (45) sous la forme d'un pôle magnétique pour un moteur linéaire à stator long, caractérisé en ce que les tôles (1) sont pourvues de trous (7) et sont enfilées grâce à ceux-ci sur des barres (9) pour former un empilage de tôle.

4. Procédé selon la revendication 3, caractérisé en ce qu'avant son introduction dans l'outil (28), l'empilage (8) de tôles est pourvu sur ses côtés frontaux d'une face polaire (12, 13) fixée de manière amovible.

5. Procédé selon la revendication 3 ou 4, caractérisé en ce qu'avant son introduction dans l'outil (28), l'empilage (8) de tôles est pourvu d'un bobinage mis en place de manière amovible.

6. Procédé selon une des revendications 3 à 5, caractérisé en ce qu'avant la formation de l'empilage de tôles, les tôles (1) sont pourvues d'évidements (49) déterminés pour la fabrication d'un générateur linéaire et des bobinages (51) sont placés de manière amovible dans les rainures (50) produites de ce fait après la formation de l'empilage de tôles.

7. Procédé selon une des revendications 1 à 6, caractérisé en ce que lors de l'introduction du mélange, un côté inférieur de l'empilage (8) de tôles et / ou des faces polaires (12, 13) est préservé au moins partiellement du mélange.

8. Procédé selon la revendication 1 ou 2 pour la fabrication d'un module électromagnétique (93) sous la forme d'un empilage de tôles du stator pour un moteur linéaire à stator long, caractérisé en ce que les tôles (61) sont pourvues sur leur côté supérieur (63) d'évidements (68) qui, après le montage de l'empilage (67) de tôles, forment au moins une rainure (71) et en ce qu'avant l'introduction du mélange dans l'outil (75), une traverse (74) servant au montage du module (93) est insérée dans la rainure (71).

9. Procédé selon la revendication 8, caractérisé en ce que lors de l'introduction du mélange, la traverse (74) est préservée du mélange au moins sur une surface supérieure (94).

10. Procédé selon la revendication 8 ou 9, caractérisé en ce qu'avant la formation d'un empilage de tôles, les tôles (61) sont pourvues sur leur côté inférieur (64) d'évidements (69) qui, après la formation de l'empilage de tôles, forment au moins une rainure (72) déterminée pour recevoir une ligne (97) électrique élastiquement déformable, laquelle rainure a une section transversale choisie en fonction des propriétés électromagnétiques souhaitables de l'empilage de tôles (67), et en ce que la paroi de la rainure (72) est pourvue par l'introduction du mélange d'un revêtement (102) constitué de celui-ci, de sorte qu'il en résulte une rainure (97) mécaniquement efficace dont la paroi (98) présente une section transversale choisie en fonction de la ligne (97).

11. Procédé selon la revendication 10, caractérisé en ce que la section transversale définitive est choisie de telle manière que les parois (98) des rainures sont ouvertes vers l'extérieur par des fentes (100) qui présentent en leur point le plus étroit une plus petite largeur que celle qui correspond au diamètre extérieur des lignes (97).

12. Procédé selon une des revendications 1 à 11, caractérisé en ce qu'un mélange thermiquement durcissable est utilisé comme mélange durcissable.

13. Procédé selon une des revendications 1 à 12, caractérisé en ce que pour la fabrication de l'empilage de tôles (8, 67), des tôles non prétraitées sont utilisées et l'isolation électrique mutuelle entre les tôles (8, 67) est obtenue en utilisant un mélange durcissable ayant des propriétés électriquement isolantes.
